# EUROPÄISCHE PATENTSCHRIFT

(11) **EP 0 955 810 B1**
(45) Veröffentlichungstag und Bekanntmachung des Hinweises auf die Patenterteilung: **31.07.2002**
(21) Anmeldenummer: 98905298.0
(22) Anmeldetag: 29.01.1998
(51) Int. Cl.: A01N 47/36

(54) **FESTE MISCHUNGEN AUF DER BASIS VON SULFONYLHARNSTOFFEN UND ADJUVANTIEN**
SULPHONYL UREA AND ADJUVANT BASED SOLID MIXTURES
MELANGES SOLIDES A BASE DE SULFONYLUREES ET ADJUVANTS

(30) Priorität: 30.01.1997 DE 19703365
(43) Veröffentlichungstag der Anmeldung: 17.11.1999
(73) Patentinhaber: BASF AKTIENGESELLSCHAFT, 67056 Ludwigshafen (DE)
(72) Erfinder: BRATZ, Matthias, D-67117 Limburgerhof (DE); JÄGER, Karl-Friedrich, D-67117 Limburgerhof (DE)
(74) Vertreter: Riedl, Peter, Dr.
(86) Internationale Anmeldenummer: EP9800201
(87) Internationale Veröffentlichungsnummer: WO9833383

(56) Entgegenhaltungen:
- EP-A- 0 498 145
- WO-A-95/28410

## Beschreibung

Die vorliegende Erfindung betrifft feste Mischungen auf der Basis von Sulfonylharnstoffen und Adjuvantien.

Sulfonylharnstoffe (im folgenden mit "SU" bezeichnet) sind eine Gruppe von hochaktiven Herbiziden, die in weiten Bereichen des Pflanzenschutzes Anwendung finden.

Bedingt durch den Mechanismus der Wirkstoffaufnahme über das Blatt kann die Wirkung von SU durch Zusatz oberflächenaktiver Stoffe wie Netzmittel zur Spritzbrühe verbessert werden (vgl. Green et al.,ANPP, Seizieme conference du columa - Journees internationales sur la lutte contre les mauvaises herbes 1995, S. 469-474; "DPX-KG 691 - A new surfactant for sulfonyl urea herbicides").

In der Literatur werden als geeignete Netzmittel u.a. Öl-Adjuvantien (Nalejewa et al., Weed Technol. 1995, 9, S. 689-695) oder Alkoholethoxylate (s.o. sowie Dunne et al., Weed Science 1994, 42, S. 82-85; Green, Weed Technol. 1993, 7, S. 633-640) als besonders geeignet beschrieben. Diese Stoffe werden in der landwirtschaftlichen Praxis als Tank-Mix-Additive vom Landwirt der Spritzbrühe zugesetzt. Dabei wird die Mischung aus SU-Herbizid und oberflächenaktivem Stoff erst kurz vor der Anwendung im Spritztank hergestellt.

Kommerziell erhältlich ist z.B. ein Doppelpack mit dem Handelsnamen CATO® (Du Pont de Nemours), welcher aus einem 25 %igen wasserdispergierbaren Granulat des Wirkstoffs Rimsulfuron (Komponente A) und einem separat abgepackten Netzmittel (Komponente B) bestehend aus einer Mischung aus 2-Butoxyethanol, polyethoxyliertem Tallowamin und Nonylphenylpolyethylenglykolether besteht. Zur Anwendung werden beide Komponenten wie oben beschrieben im Spritztank gemischt.

In der Praxis wäre es wünschenswert, Fertigformulierungen einsetzen zu können, in denen ein wirkungssteigerndes Netzmittel bereits enthalten ist, um die problematische Mischung unmittelbar vor der Anwendung zu vermeiden. Auf diese Weise könnten logistische Probleme und Mischungsfehler beim Ansetzen der Spritzbrühe vermieden werden. Ferner sind Festformulierungen generell aus anwendungstechnischer Sicht bei der Gestaltung und Entsorgung der Verpackungen vorteilhaft.

Aus der Literatur ist weiterhin bekannt, daß Formulierungen, die Sulfonylharnstoffe enthalten, bezüglich der Stabilität der Wirkstoffe problematisch sind, da der Wirkstoff sich unter ungünstigen Bedingungen im Lauf der Zeit zersetzen kann. Die gewünschte herbizide Wirkung ist dann nicht mehr gegeben. Die Tendenz zur Zersetzung ist auch hinsichtlich der Registrierungsanforderungen problematisch, da bei der Registrierung bestimmte Mindestanforderungen an die Stabilität von PS-Wirkstoffen in Formulierungen gestellt werden.

In der JP-A 62/084004 wird die Verwendung von Calciumcarbonat und Natrium-tripolyphosphat zur Stabilisierung von SU-haltigen Formulierungen beschrieben.

Die JP-A 63/023806 beschreibt eine Problemlösung durch Verwendung spezieller Trägerstoffe und Pflanzenöle zur Herstellung fester SU-haltiger Formulierungen. Die JP-A 08/104603 beschreibt ähnliche Effekte bei der Verwendung von epoxydierten natürlichen Ölen. Beide vorstehend genannten Anmeldungen haben als gemeinsames Merkmal die Inkorporation von Pflanzenölen in der Festformulierung, um neben einer verbesserten Stabilität die wirkungssteigernden Effekte dieser als Adjuvantien wirksamen Stoffe zu nutzen.

Bei der Einarbeitung von Pflanzenölen in flüssige Formulierungen (in der Regel Suspensionskonzentrate) werden ähnliche Effekte ausgenutzt (vgl. EP-A 313317 und EP-A 554015).

Aus dem Stand der Technik ist auch bekannt, daß Alkylpolyglucoside als Netzmittel/Adjuvantien verwendet werden können.

Gegenstand der WO 95/28410 sind feste Mischungen aus einem Wirkstoff und einem Alkylpolyglucosid in Form eines Absorbats auf einem Trägerstoff.

In der EP-A-498 145 sind Alkylpolyglykoside mit dem Wirkstoff N-Phosphono-Methylglycin in Feststoffformulierungen beschrieben.

Aufgabe der vorliegenden Erfindung war es daher, Festformulierungen mit Sulfonylharnstoffen als Wirkstoffen zur Verfügung zu stellen, die Adjuvantien bereits in der Festformulierung enthalten und bisher bekannten Festformulierungen überlegen sind.

Diese Aufgabe wird erfindungsgemäß durch feste Mischungen gelöst, die enthalten
a) einen Sulfonylharnstoff und
b) ein Adjuvant aus der Gruppe der Alkylpolyglykoside .

Überraschenderweise wurde gefunden, daß bei Verwendung von Alkylpolyglykosiden als Netzmittel in SU-haltigen Feststoffformulierungen eine ausgeprägte Stabilisierung des Wirkstoffs im Vergleich zu anderen Netzmitteln (z.B. ethoxylierten Fettaminen oder Alkoholethoxylaten) auftritt. Dieser Effekt ist vor allem dann zu beobachten, wenn neben herbiziden Wirkstoffen wasserlösliche anorganische Salze wie Ammoniumsulfat vorhanden sind. Besonders deutlich wird die Stabilisierung wenn das Netzmittel in der für die biologische Wirkung erforderlichen Konzentration eingesetzt wird.

Durch Mischung der SU mit anderen Wirkstoffen. Alkylpolyglykosiden und Ammoniumsulfat lassen sich lagerstabile Fertigformulierungen mit guter biologischer Wirkung erhalten.

Weiterhin wurden Verfahren zur Herstellung der erfindungsgemäßen festen Mischungen gefunden sowie deren Verwendung als Pflanzenschutzmittel zur Bekämpfung unerwünschter. Schadpflanzen.

Als Sulfonylharnstoff a) kommen generell Verbindungen mit der Struktureinheit 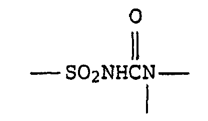 in Betracht.

Bevorzugt werden SU der folgenden Strukturen I: 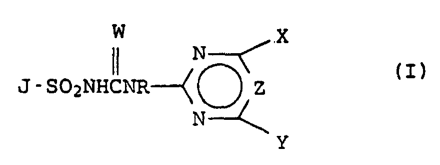 wobei J folgende Bedeutung hat: 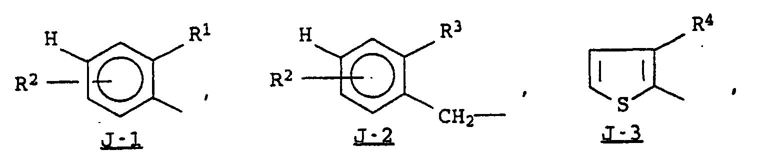 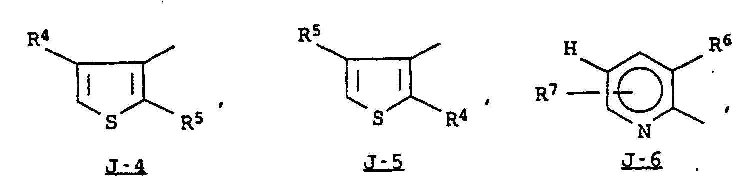 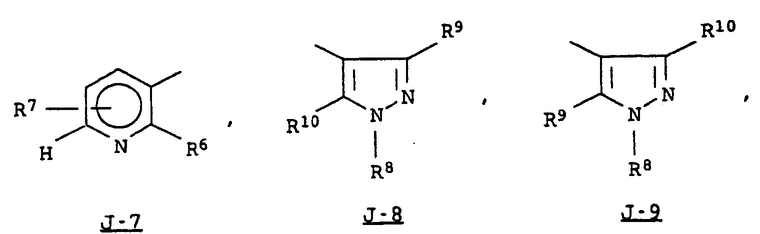 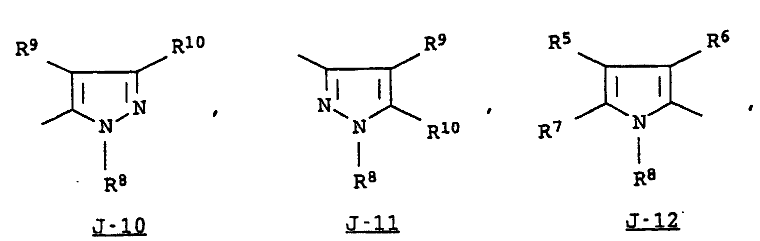 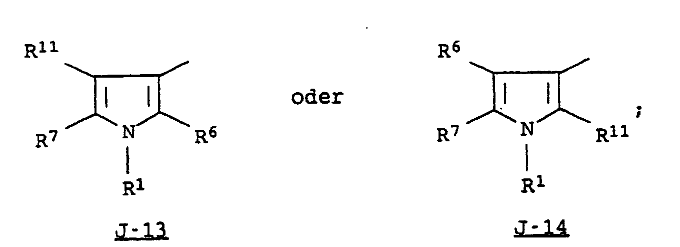 wobei die Substituenten R bis R¹⁸ folgende Bedeutung haben:
- R:: H oder CH₃;
- R¹:: F, Cl, Br, NO₂, C₁-C₄-Alkyl, C₁-C₄-Haloalkyl, C₃-C₄-Cycloalkyl, C₂-C₄-Haloalkenyl, C₁-C₄-Alkoxy, C₁-C₄-Haloalkoxy, C₂-C₄-Alkoxyalkoxy, CO₂R¹², C(O)NR¹³R¹⁴, SO₂NR¹⁵R¹⁶, S(O)ₙR¹⁷, C(O)R¹⁸, CH₂CN oder L;
- R²:: H, F, Cl. Br, CN, CH₃, OCH₃, SCH₃, CF₃ oder OCF₂H;
- R³:: Cl, NO₂, CO₂CH₃, CO₂CH₂CH₃, SO₂N(CH₃)₂, SO₂CH₃, SO₂CH₂CH₃, OCH₃, or OCH₂CH₃;
- R⁴:: C₁-C₃-Alkyl, C₁-C₄-Haloalkyl, C₁-C₄-Alkoxy, C₂-C₄-Haloalkenyl, F, Cl, Br, NO₂, CO₂R¹², C(O)NR¹³R¹⁴, SO₂NR¹⁵R¹⁶, S(O)ₙR¹⁷, C(O)R¹⁸ or L;
- R⁵:: H, F, Cl, Br oder CH₃;
- R⁶:: C₁-C₄-Alkyl, C₁-C₄-Alkoxy, C₂-C₄-Haloalkenyl, F, Cl, Br, CO₂R¹², C(O)NR¹³R¹⁴, SO₂NR¹⁵R¹⁶, S(O)ₙR¹⁷, C(O)R¹⁸ or L;
- R⁷:: H, F, Cl, CH₃ oder CF₃;
- R⁸:: H, C₁-C₄-Alkyl oder Pyridyl;
- R₉:: ist C₁-C₄-Alkyl, C₁-C₄-Alkoxy, F, Cl, Br, NO₂, CO₂R¹², SO₂NR¹⁵R¹⁶, S(O)ₙR¹⁷, OCF₂H, C(O)R¹⁸, C₂-C₄ Haloalkenyl oder L;
- R¹⁰:: H, Cl, F. Br, C₁-C₄-Alkyl or C₁-C₄-Alkoxy;
- R¹¹:: H, C₁-C₄-Alkyl, C₁-C₄-Alkoxy, C₂-C₄-Alkoxy; Haloalkenyl, F, Cl, Br, CO₂R¹² C(O)NR¹³R¹⁴, SO₂NR¹⁵R¹⁶, S(O)ₙR¹⁷, C(O)R¹⁸ oder L;
- R¹²:: C₁-C₄-Alkyl, ggf. substituiert durch Halogen, C₁-C₄-Alkoxy oder CN, Allyl oder Propargyl;
- R¹³:: H, C₁-C₄-Alkyl oder C₁-C₄-Alkoxy;
- R¹⁴:: C₁-C₄-Alkyl;
- R¹⁵:: H, C₁-C₄-Alkyl, C₁-C₄-Alkoxy, Allyl oder Cyclopropyl;
- R¹⁶:: H oder C₁-C₄-Alkyl;
- R¹⁷:: C₁-C₄-Alkyl, C₁-C₄-Haloalkyl, Allyl oder Propargyl;
- R¹⁸:: C₁-C₄-Alkyl, C₁-C₄-Haloalkyl or C₃-C₅ Cycloalkyl, ggf. substituiert durch Halogen;
- n: 0,1 oder 2 ist;
- L: die Struktur II 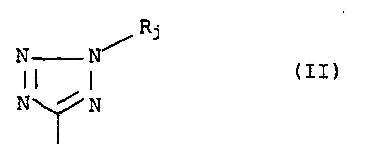
hat, wobei
- Rj:: H oder C₁-C₃ Alkyl;
- W:: O oder S;
- X:: H, C₁-C₄-Alkyl, C₁-C₄-Alkoxy, C₁-C₄-Haloalkoxy, C₁-C₄-Haloalkyl, C₁-C₄-Haloalkylthio, C₁-C₄-Alkylthio, Halogen, C₂-C₅-Alkoxyalkyl, C₂-C₅-Alkoxyalkoxy, Amino, C₁-C₃-Alkylamino oder Di(C₁-C₃ alkyl)-Amino;
- Y:: H, C₁-C₄-Alkyl, C₁-C₄-Alkoxy, C₁-C₄-Haloalkoxy, C₁-C₄-Alkylthio, C₁-C₄-Haloalkylthio, C₂-C₅-Alkoxyalkyl, C₂-C₅-Alkoxyalkoxy, Amino, C₁-C₃-Alkylamino, Di(C₁-C₃-Alkyl)-Amino, C₃-C₄-Alkenyloxy, C₃-C₄-Alkanyloxy, C₂-C₅-Alkylthioalkyl, C₂-C₅-Alkylsulfinylalkyl, C₂-C₅-Alkylsulfonylalkyl, C₁-C₄-Haloalkyl, C₂-C₄-Alkenyl, C₃-C₅-Cycloalkyl, Azido, Fluor oder Cyano;
- Z:: CH oder N; ist,
und deren landwirtschaftlich brauchbare Salze.

Nachstehend seien einige geeignete SU mit ihrem INN (International Nonproprietary Name) gemäß Pesticide Manual erwähnt:
ACC 322140;
Amidosulfuron;
Azimsulfuron (N-[[(4,6-dimethoxy-2-pyrimidinyl)amino]-carbonyl]-1-methyl-4- (2-methyl-2H-tetrazol-5-yl)-1H-pyrazol-5-sulfonamid);
Bensulfuron-methyl (Methyl 2-[[[[[(4,6-dimethoxy-2-pyrimidinyl)-amino] -carbonyl]amino]sulfonyl]methyl]benzoat) ;
Ethyl 2-[[[[(4-chloro-6-methoxy-2-pyrimidinyl)-amino]carbonyl] amino]sulfonyl]benzoat(Chlorimuron ethyl) ;
2-Chloro-N-[[(4-methoxy-6-methyl-1,3,5-triazin-2-yl)amino]carbonyl]benzolsulfonamid(Chlorsulfuron);
Chlorsulfoxim;
Cinosulfuron;
Cyclosulfamuron;
Ethametsulfuron-methyl (Methyl 2-[[[[[4-ethoxy-6-(methylamino) -1,3,5-triazin-2-yl]amino]carbonyl]amino]sulfonyl]-benzoat);
Ethoxysulfuron;
Flazasulfuron;
Flupyrsulfuron (Methyl 2-[[[[(4,6-dimethoxy-2-pyrimidinyl)-amino]-carbonyl]amino]sulfonyl]-6-(trifluormethyl)-3-pyridincarboxylat);
Halosulfuron-methyl ;
Imazosulfuron;
Methyl 2-[[[[(4-methoxy-6-methyl-1,3,5-triazin-2-yl)amino]carbonyl]aminolsulfonyl]benzoat(Metsulfuron methyl) ;
Nicosulfuron (2-[[[[(4,6-dimethoxy-2-pyrimidinyl)amino]-carbonyl]amino]sulfonyl]-N,N-dimethyl-3-pyridincarboxamid);
Oxasulfuron;
Primisulfuron (Methyl 2-[[[[[4,6-bis(difluormethoxy)-2-pyrimidinyl]amino]carbonyl]amino]sulfonyl]benzoat) ;
Prosulfuron;
Pyrazosulfuron-ethyl (Ethyl 5-[[[[(4,6-dimethoxy-2-pyrimidinyl)-amino] -carbonyl] amino] sulfonyl] -1-methyl-1H-pyrazol-4-carboxylat) ;
Rimsulfuron (N-[[(4,6-dimethoxy-2-pyrimidinylamino]carbonyl]-3-(ethylsulfonyl)-2-pyridinsulfonamid) ;
Sulfosulfuron;
Sulfometuron-methyl (Methyl 2-[[[[(4,6-dimethyl-2-pyrimidinyl)-amino]-carbonyl]amino]sulfonyl]benzoat();
Thifensulfuron-methyl (Methyl-3-[[[[(4-methoxy-6-methyl-1,3,5-triazin-2-yl]amino]carbonyl]amino]sulfonyl]-2-thiophencarboxylat);
2-(2-Chlorethoxy)-N-[[(4-methoxy-6-methyl-1,3,5-triazin-2-yl)-amino]carbonyl]benzolsulfonamid (Triasulfuron);
Tribenuron-methyl (Methyl 2-[[[[N-(4-methoxy-6-methyl-1,3,5-triazin-2-yl)-N-methylamino]carbonyllamino]sulfonyl]benzoat);
   und
Triflusulfuron-methyl (Methyl 2-[[[[[4-(dimethylamino)-6-(2,2,2-trifluoroethoxy)-1,3,5-triazin-2-yl]amino]-carbonyl]-amino]sulfonyl]-3-methylbenzoat) ;

Besonders bevorzugt sind Sulfonylharnstoffe der allgemeinen Formel III (entspricht der Formel I mit J=J₁), wie sie z.B aus der EP-A 388 873, der EP-A 559 814, der EP-A 291 851 und der EP-A 446 743 bekannt sind : 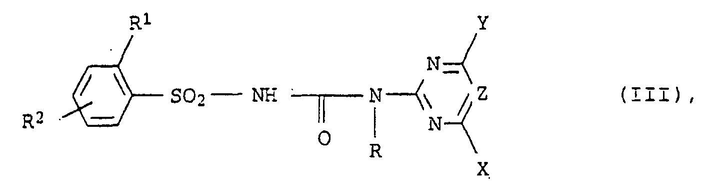 wobei die Substituenten folgende Bedeutung haben:
- R¹: C₁-C₄-Alkyl, das eine bis fünf der folgenden Gruppen tragen kann: Methoxy, Ethoxy, SO₂CH₃, Cyano, Chlor, Fluor, SCH₃, S(O)CH₃;
Halogen;
eine Gruppe ER¹⁹, in der E O, S oder NR²⁰ bedeutet;
COOR¹²;
NO₂;
S(O)ₙR¹⁷, SO₂NR¹⁵R¹⁶, CONR¹³R¹⁴;
- R²: Wasserstoff, Methyl, Halogen, Methoxy, Nitro, Cyano, Trifluormethyl, Trifluormethoxy, Difluormethoxy oder Methylthio,
- Y: F, CF₃, CF₂Cl,CF₂H, OCF₃, OCF₂Cl, C₁-C₄-Alkyl oder C₁-C₄-Alkoxy;
- X: C₁-C₂-Alkoxy, C₁-C₂-Alkyl, C₁-C₂-Alkylthio, C₁-C₂-Alkylamino, Di-C₁-C₂-Alkylamino, Kalogen, C₁-C₂-Halogenalkyl, C₁-C₂-Halogenalkoxy,
- R: Wasserstoff oder Methyl;
- R¹⁹: C₁-C₄-Alkyl, C₂-C₄-Alkenyl, C₂-C₄-Alkinyl oder C₃-C₆-Cycloalkyl, welche 1 bis 5 Halogenatome tragen können. Ferner bedeutet R¹⁹ im Falle, daß E für O oder NR²⁰ steht, noch Methylsulfonyl, Ethylsulfonyl, Trifluormethylsulfonyl, Allylsulfonyl, Propargylsulfonyl oder Dimethylsulfamoyl;
- R²⁰: Wasserstoff, Methyl oder Ethyl
- R¹²: eine C₁-C₄-Alkylgruppe, welche bis zu drei der folgenden Reste tragen kann: Halogen, C₁-C₄-Alkoxy, Allyl oder Propargyl;
- R¹⁷: eine C₁-C₄-Alkylgruppe, welche einen bis drei der folgenden Reste tragen kann: Halogen, C₁-C₄-Alkoxy, Allyl oder Propargyl;
- R¹⁵: Wasserstoff, eine C₁-C₂-Alkoxygruppe oder eine C₁-C₄-Alkylgruppe;
- R¹⁶: Wasserstoff oder eine C₁-C₄-Alkylgruppe,
- n: 1 oder 2
- Z: N, CH.

Insbesondere bevorzugte Sulfonylharnstoffe der Formel III sind solche der allgemeinen Formel I, in denen J für J₁ steht und die restlichen Substituenten die folgende Bedeutung haben :
- R¹: CO₂CH₃,CO₂C₂H₅, CO₂iC₃H₇, CF₃, CF₂H; OSO₂CH₃, OSO₂N(CH₃)₂, Cl, NO₂, SO₂N(CH₃)₂, SO₂CH₃ und N(CH₃)SO₂CH₃,
- R²: Wasserstoff, Cl, F oder C₁-C₂-Alkyl,
- Y: CF₂H, OCF₃, OCF₂Cl, CF₂Cl, CF₃ oder F,
- X: OCH₃, OC₂H₅, OCF₃, OCF₂Cl; CF₃, Cl, F, NH(CH₃), N(CH₃)₂ oder C₁-C₂-Alkyl,
- R⁵: Wasserstoff, und
- Z: N oder CH.

Ganz besonders bevorzugte Verbindungen der Formel III sind in der folgenden Tabelle zusammengestellt.

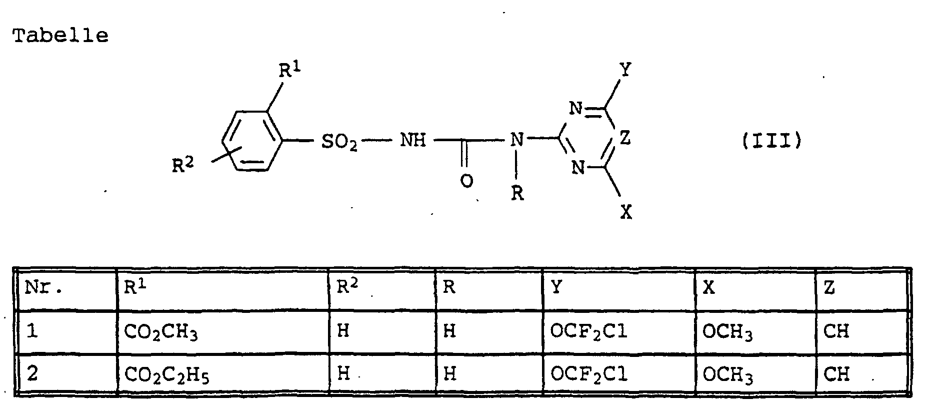

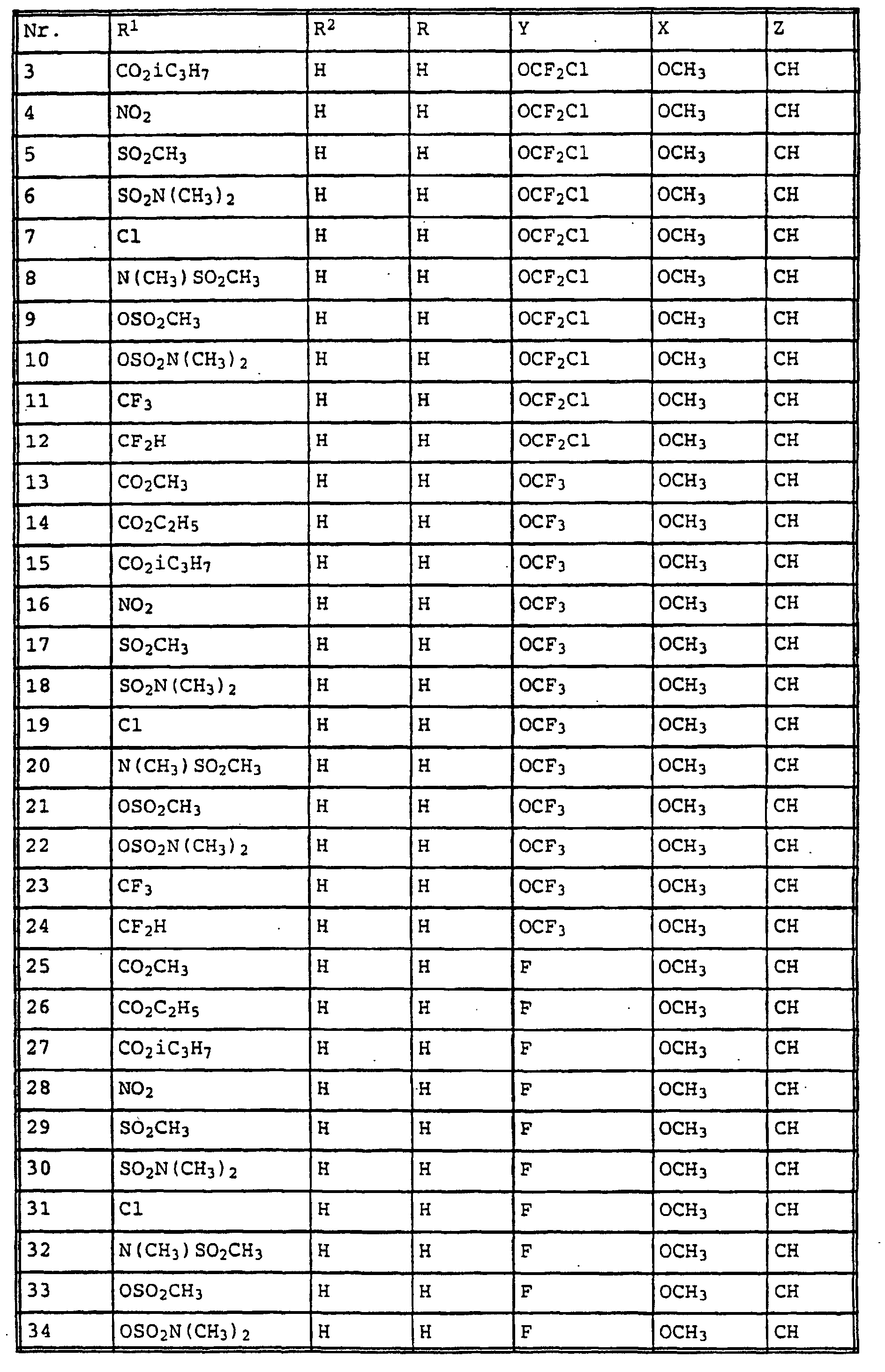

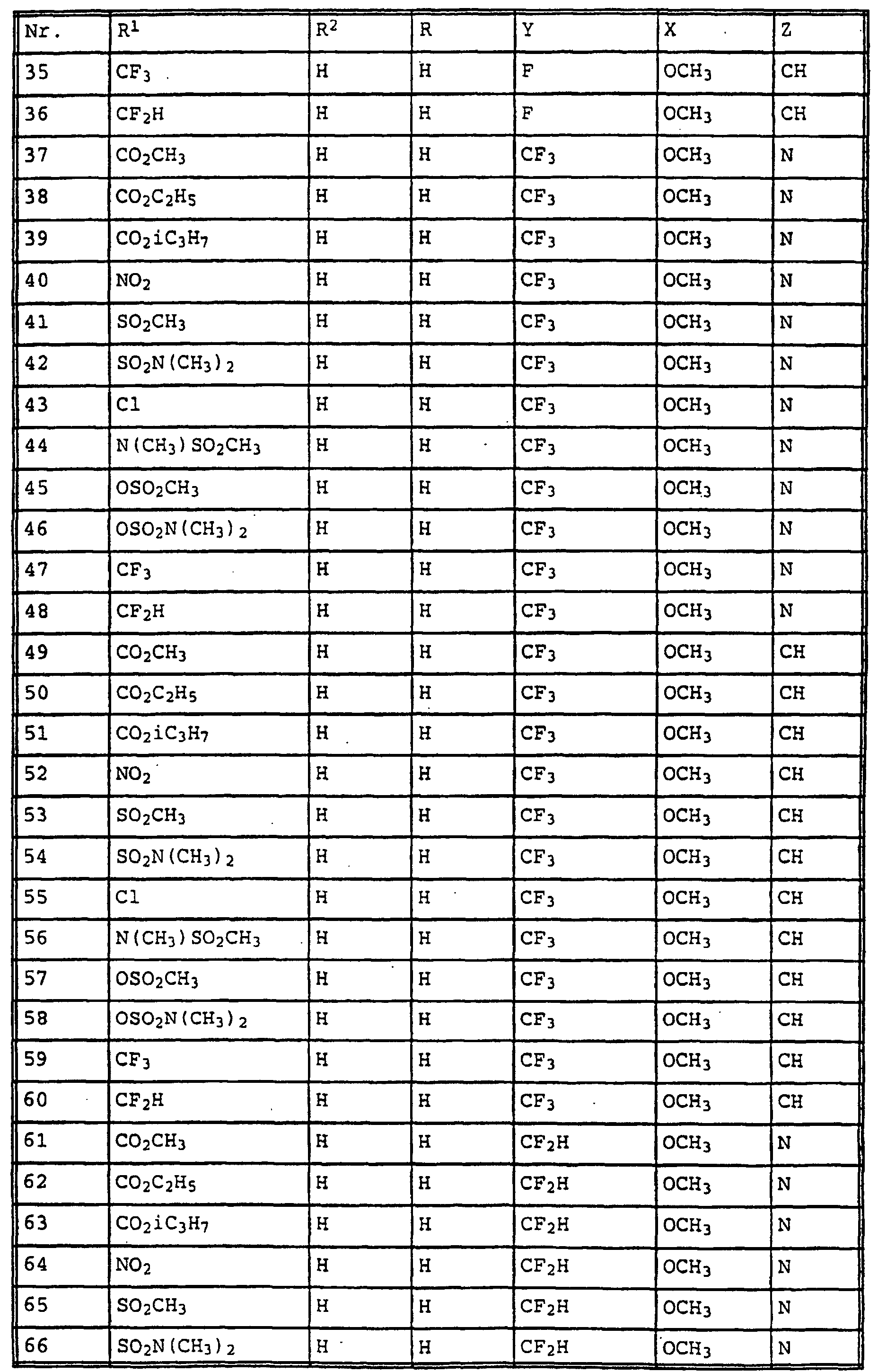

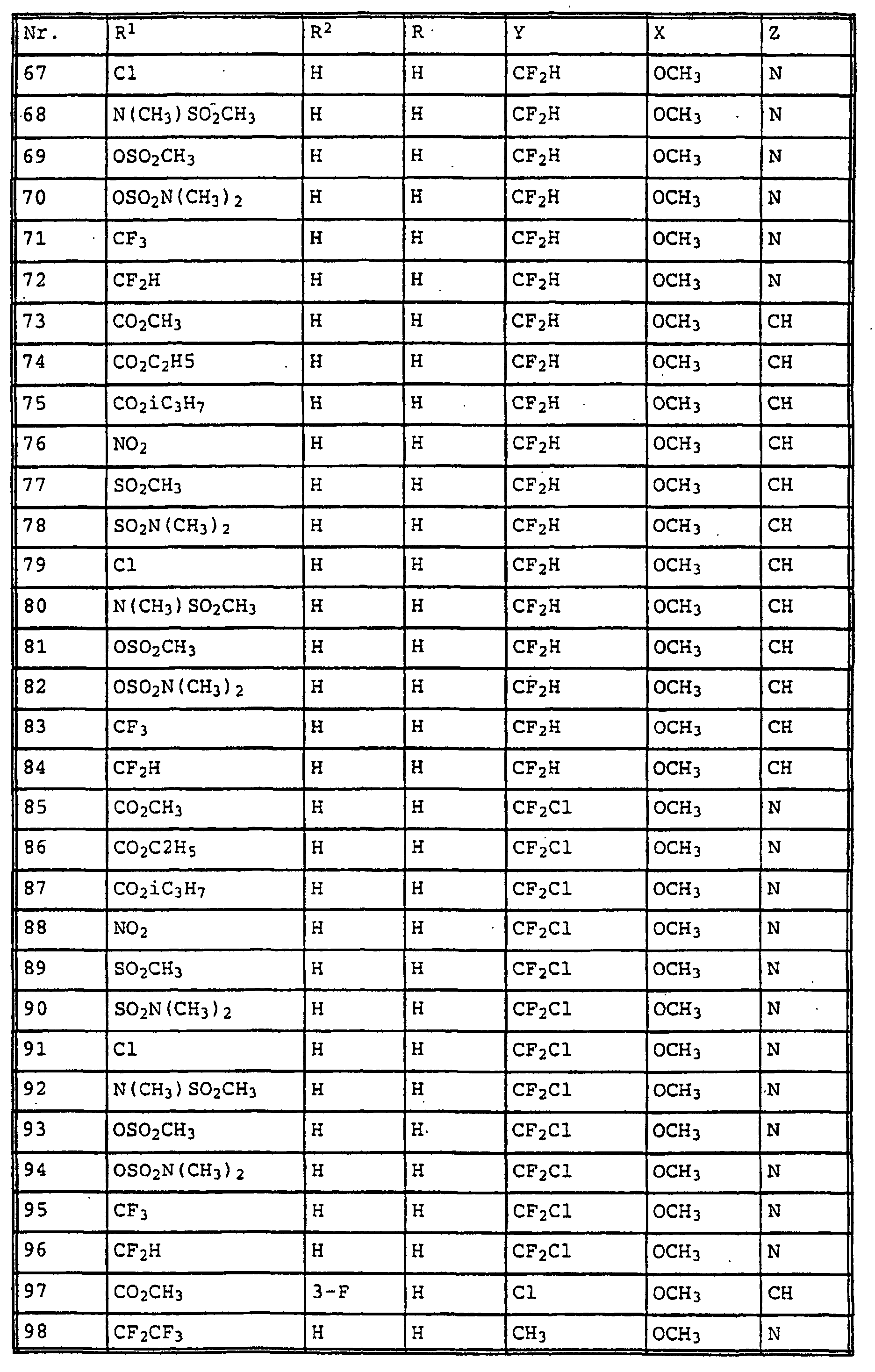

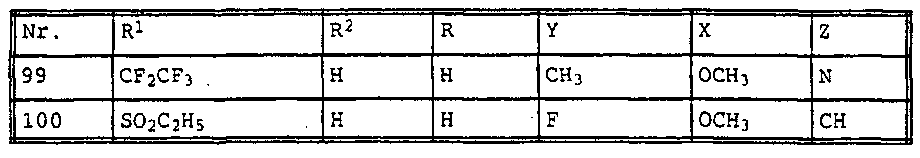

Selbstverständlich können als Komponente a) auch Mischungen mehrerer Sulfonylharnstoffe eingesetzt werden.

Als Komponente b) enthalten die erfindungsgemäßen Festformulierungen eines oder mehrere Alkylpolyglykoside (nachstehend als APG bezeichnet). Die Substanzklasse der APG wird in der Literatur je nach chemischer Struktur und Reaktionsführung der Synthese als Alkylglukoside, Alkylglykoside, Alkylpolyglukoside oder Alkylpolyglykoside bezeichnet. Im folgenden wird hierin nur noch der Begriff APG stellvertretend für alle Bezeichnungen verwendet und erfaßt stets die gesamte Gruppe der vorstehend genannten Verbindungen.

Als Komponente b) kommen vor allem APG mit einem mittleren Polymerisationsgrad im Bereich von 1,0 bis 6,0 in Betracht. Diese können durch die allgemeine Formel II

R²¹O(Z)ₐ

charakterisiert werden, wobei R²¹ für einen Alkylrest mit 4 bis 30, vorzugsweise 8 bis 18 C-Atomen und Z für einen Glycosidrest mit 5 bis 6 Kohlenstoffatomen steht und a einen Wert im Bereich von 1 bis 6, vorzugsweise von 1,0 bis 1,7 hat. Entsprechende Produkte sind unter anderem unter den Bezeichnungen Agrimul ® PG, APG®, Plantaren® oder Glucopon® (alle Fa. Henkel), Lutensol® (Fa. BASF), Atplus® (Fa. ICI Surfactants) oder Triton® (Fa. Union Carbide) im Handel erhältlich.

Besonders erwähnt seien hier:
Agrimul® PG 2067 : ein APG mit einer C₈-C₁₀ Alkylgruppe und einem durchschnittlichen Polymerisationsgrad von 1,7;
APG® 425 : ein APG mit einer C₈-C₁₆ Alkylgruppe und einem durchschnittlichen Polymerisationsgrad von 1,6;
APG® 625 : ein APG mit einer C₁₂-C₁₆ Alkylgruppe und einem durchschnittlichen Polymerisationsgrad von 1,6;
APG® 300 : ein APG mit einer C₈-C₁₆ Alkylgruppe und einem durchschnittlichen Polymerisationsgrad von 1,4;
AG 6202 : ein APG mit einer 2-Ethyl-hexylkette (Akzo Nobel) und einem durchschnittlichen Polymerisationsgrad von 1,6;
Lutensol® GD 70 : ein APG mit einer C₁₀-C₁₂-Alkylgruppe (BASF AG) und einem durchschnittlichen Polymerisationsgrad von 1,3;
Agrimul® PG 2069 : ein APG mit einer C₉-C₁₁ Alkylgruppe und einem durchschnittlichen Polymerisationsgrad von 1,6;
Glucopon® 600 : ein APG mit einer C₁₂-C₁₆ Alkylgruppe und einem durchschnittlichen Polymerisationsgrad von 1,4;
Plantaren® 1300 : ein APG mit einer C₁₂-C₁₆ Alkylgruppe und einem durchschnittlichen Polymerisationsgrad von 1,6.

Weiterhin bevorzugte APGs sind Atplus® 258, Atplus® 264, Atplus® 430, Atplus® 460, Atplus® 469 und Atplus® 450 (Alkylpolysaccharid/Adjuvant-Blends, ICI Surfactants) sowie Agrimul® PG 215, Agrimul® PG 600, Triton® BG-10 sowie Triton® CG-110.

Gegenüber unverzweigten Alkylresten können verzweigte Alkylreste besonders bevorzugt sein.

Der Anteil der Komponente a) an den erfindungsgemäßen festen Mischungen liegt im allgemeinen im Bereich von 0,5 bis 75 Gew.%,vorzugsweise von 1 bis 25 Gew.%, bezogen auf das Gesamtgewicht der Formulierung.

Der Anteil der APG (Komponente b) liegt im allgemeinen im Bereich von 1 bis 75, insbesondere 1 bis 50 und besonders bevorzugt 5 bis 25 Gew.%, bezogen auf das Gesamtgewicht der Formulierung.

Neben den Komponenten a) und b) können die erfindungsgemäßen festen Mischungen noch weitere, mit Sulfonylharnstoffen mischbare bzw. synergistisch wirksame andere Wirkstoffe enthalten. Entsprechende Produkte sind dem Fachmann bekannt und in der Literatur beschrieben. Die folgenden Gruppen von weiteren Wirkstoffen seien beispielhaft unter Verwendung ihrer INN (in englischer Sprache) genannt :
c1: 1,3,4-Thiadiazole :
   buthidazole, cyprazole;
c2: Amide :
   allidochlor (CDAA), Benzoylprop-ethyl, Bromobutide, chlorihiamid, dimepiperate, dimethenamid, diphenamid, etobenzanid (benzchlomet), flamprop-methyl, fosamin, isoxaben, monalide, naptalame, pronamid (propyzamid), propanil;
c3: Aminophosphorsäuren :
   bilanafos (bialaphos)ₜ buminafos, glufosinate-ammonium, glyphosate, sulfosate
c4: Aminotriazole :
   Amitrol;
c5: Anilide :
   anilofos, mefenacet, thiafluamide;
c6: Aryloxyalkansäuren
   2,4-D, 2,4-DB, clomeprop, dichlorprop, dichlorprop-P, (2.,4-DP-P), fenoprop (2,4,5-TP), fluoroxypyr, MCPA, MCPB, mecoprop, mecoprop-P, napropamide, napropanilide, triclopyr;
c7: Benzoesäuren :
   chloramben, dicamba;
c8 : Benzothiadiazinone :
   Bentazon;
c9: Bleacher :
   clomazone (dimethazone), diflufenican, fluorochloridone, flupoxam, fluridone, pyrazolate, sulcotrione (chlor-mesulone) isoxaflutol, 2-(2'-Chlor-3'-Ethoxy-4'-ethylsulfonyl-benzoyl)-4-methylcyclohexan-1,3-dion;
c10: Carbamate :
   asulam, barban, butylate, carbetamide, chlorbufam, chlorpropham, cycloate, desmedipham, diallate, EPTC, esprocarb, molinate, orbencarb, pebulate, phenisopham, phenmedipham, propham, prosulrocarb, pyributicarb, sulfallate (CDEC), terbucarb, thiobencarb (benthiocarb), tiocarbazil, triallate, vernolate;
c11: Chinolinsäuren :
   quinclorac, quinmerac;
c12: Chloracetanilide :
   acetochlor, alachlor, butachlor, butenachlor, diethatyl ethyl, dimethachlor, dimethenamide (vgl. auch unter Kategorie c2) metazachlor, metolachlor, pretilachlor, propachlor, prynachlor, terbuchlor, thenylchlor, xylachlor;
c13:Cyclohexenone :
   alloxydim, caloxydim, clethodim, cloproxydim, cycloxydim, sethoxydim, tralkoxydim, 2-{1-[2-(4-Chlor-phenoxy) propyloxyimino] butyl}-3-hydroxy-5- (2H-tetrahydrothiopyran-3-yl)-2-cyclohexen-1-on;
c14: Dichlorpropionsäuren :
   dalapon;
c15: Dihydrobenzofurane :
   ethofumesate;
c16: Dihydrofuran-1-one :
   flurtamone;
c17: Dinitroaniline :
   benefin, butralin, dinitramin, ethalfluralin, fluchloralin, isopropalin, nitralin, oryzalin, pendimethalin, prodiamine, profluralin, trifluralin;
c18: Dinitrophenole:
   bromofenoxim, dinoseb, dinoseb-acetat, dinoterb, DNOC;
c19: Diphenylether :
   acifluorfen-sodium, aclonifen, bifenox, chlornitrofen (CNP), difenoxuron, ethoxyfen, fluorodifen, fluoroglycofen-ethyl, fomesafen, furyloxyfen, lactofen, nitrofen, nitrofluorfen, oxyfluorfen;
c20: Dipyridylene :
   cyperquat, difenzoquat-methylsulfat, diquat, paraquat-dichlorid;
c21: Harnstoffe :
   benzthiazuron, buturon, chlorbromuron, chloroxuron, chlortoluron, cumyluron, dibenzyluron, cycluron, dimefuron, diuron, dymron, ethidimuron, fenuron, fluormeturon, isoproturon, isouron, karbutilat, linuron, methabenzthiazuron, metobenzuron, metoxuron, monolinuron, monuron, neburon, siduron, tebuthiuron, trimeturon;
c22: Imidazole :
   iscarbamide;
c23: Imidazolinone :
   imazamethapyr, imazapyr, imazaquin, imazethabenz-methyl (imazame),imazethapyr, imazamox;
c24: Oxadiazole :
   methazole, oxadiargyl, oxadiazone;
c25: Oxirane :
   tridiphane
c26: Phenole :
   bromoxynil, ioxynil;
c27: Phenoxypropionsäureester
   clodinafop, cyhalofop-butyl, diclofop-methyl, fenoxaprop-ethyl, fenoxaprop-p-ethyl, fenthiapropethyl, fluazifop-butyl, fluazifopp-butyl, haloxyfop-ethoxyethyl, haloxyfop-methyl, haloxyfop-p-methyl, isoxapyrifop, propaquizafop, quizalofop-ethyl, guizalofop-p-ethyl, quizalofoptefuryl;
c28: Phenylessigsäuren :
   chlorfenac (fenac);
c29: Phenylpropionsäuren :
   chlorophenprop-methyl;
c30: Protoporphyrinogen-IX-Oxydase-Hemmer
   benzofenap, cinidon-ethyl, flumiclorac-pentyl, flumioxazin, flumipropyn, flupropacil, fluthiacet-methyl, pyrazoxyfen, sulfentrazone, thidiazimine, carfentrazone, azafenidin;
c31: Pyrazole :
   nipyraclofen;
c32: Pyridazine :
   chloridazon, maleic hydrazide, norflurazon, pyridate;
c33: Pyridincarbonsäuren:
   clopyralid, dithippyr, picloram, thaizopyr;
c34: Pyrimidylether :
   pyrithiobac-acid, pyrithiobac-sodium, pyriminobac-methyl, bispyribenzoxim, bispyribac-sodium;
c35: Sulfonamide :
   flumetsulam, metosulam, cloransulam-methyl, diclosulam;
c36: Triazine :
   ametryn, atrazin, aziprotryn, cyanazine, cyprazine, desmetryn, dimethamethryn, dipropetryn, eglinazin-ethyl, hexazinon, procyazine, prometon, prometryn, propazin, secbumeton, simazin, simetryn, terbumeton, terbutryn, terbutylazin, trietazin, dimesyflam;
c37: Triazinone :
   ethiozin, metamitron, metribuzin;
c38: Triazolcarboxamide :
   triazofenamid;
c39: Uracile:
   bromacil, lenacil, terbacil;
c40: Verschiedene :
   benazolin, benfuresate, bensulide, benzofluor, butamifos, cafenstrole, chlorthal-dimethyl (DCPA), cinmethylin, dichlobenil, endothall, fluorbentranil, mefluidide, perfluidone, piperophos, diflufenzopyr, diflufenzopyr-natrium
oder die umweltverträglichen Salze der vorstehend genannten Wirkstoffgruppen.

Bevorzugte weitere Wirkstoffe c) sind z.B.
bromobutide, dimethenamide, isoxaben, propanil,
glufosinate-ammonium, glyphosate, sulfosate,
mefenacet, thiafluamide,
2,4-D, 2,4-DB, dichlorprop, dichlorprop-P,
dichlorprop-P(2,4-DP-P), fluoroxopyr, MCPA, mecoprop, mecoprop-P, dicamba,
Bentazon,
clomazone, diflufenican, sulcotrione, isoxaflutole, phenmedipham, thiobencarb,
quinclorac, quinmerac,
acetochlor, alachlor, butachlor, metazachlor, metolachlor, pretilachlor,
butroxydim, caloxydim, clethodim, cycloxydim, sethoxydim, tralkoxydim, 2-{1-[2-(4-Chlor-phenoxy) propyloxyimino] butyl}-3-hydroxy-5-(2H-tetrahydrothiopyran-3-yl)-2-cyclohexen-1-on, pendimethalin,
acifluorfen-sodium, bifenox, fluoroglycofen-ethyl, fomesafen, lactofen,
chlortoluron, cycluron, dymron, isoproturon, metabenzthiazuron, imazaquin, imazamox, imazethabenz-methyl, imazethapyr,
bromoxynil, ioxynil,
clodinafop, cyhlaofop-butyl, fenoxyprop-ethyl, fenoxaprop-p-ethyl, haloxyfop-p-methyl,
cinidon-ethyl, flumiclorac-pentyl, carfentrazone, flumipropyn, fluthiacet-methyl,
pyridate,
clopyralid,
bispyribac-sodium, pyriminobac-methyl,
flumetsulam, metosulam,
atrazin, cyanazine, terbutylazine,
benazolin, benfuresate, cafenstrole, cinemthylin, ammonium-bentazon, cloquintocet, diflufenzopyr, diflufenzopyr-Natrium, pyraflufen-ethyl.

Insbesondere bevorzugt sind folgende Verbindungen c):
2,4-D, Dichlorprop-P, MCPA, mecoprop-P,
dicamba,
bentazon,
diflufenican, sulcotrione,
quinclorac,
caloxydim, cycloxydim, sethoxydim, 2-{1-[2-(-(4-Chlor-phenoxy) propyloxyiminol butyl}-3-hydroxy-5-(2H-tetrahydrothiopyran-3-yl)-2-cyclohexen-1-on,
acifluorfen-sodium, fluoroglycofen-ethyl,
bromoxynil,
fenoxyprop-ethyl,
cinidon-ethyl,
Atrazin, terbutylazin,
ammonium-bentazon, cloquintocet,
thiafluamid, isoxaflutole, diflufenzopyr, diflufenzopyr-Na, carfentrazone, imazamox.

Ganz besonders bevorzugt sind folgende Verbindungen c):
2,4-D, dichlorprop-P, Mecoprop-P, MCPA, ammonium-bentazon, Bentazon, diflufenican, quinclorac, 2-{1-[2-(-(4-Chlor-phenoxy) propyloxyimino] butyl}-3-hydroxy-5-(2H-tetrahydrothiopyran-3-yl)-2-cyclohexen-1-on, caloxydim, cycloxydim, sethoxydim, fluoroglycofen-ethyl, cinidon-ethyl, atrazin und terbutylazine, dicamba, diflufenzopyr, diflufenzopyr-Na.

Der Anteil der weiteren Wirkstoffe c), wenn solche vorhanden sind, liegt im allgemeinen im Bereich von 0,5 bis 75, vorzugsweise von 1 bis 60 Gew.% der Formulierung.

Neben den vorstehend beschriebenen Komponenten a), b) und c) können die erfindungsgemäßen festen Mischungen noch an sich bekannte Formulierungshilfsmittel enthalten.

Als oberflächenaktive Stoffe kommen dabei die Alkali-, Erdalkalioder Ammoniumsalze von aromatischen Sulfonsäuren, z.B. Lignin-, Phenol-, Naphthalin- und Dibutylnaphthalinsulfonsäure, sowie von Fettsäuren von Arylsulfonaten, von Alkylethern, von Laurylethern, von Fettalkoholsulfaten und von Fettalkoholglykolethersulfaten. Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd. Kondensationsprodukte des Phenols oder der Phenolsulfonsäure mit Formaldehyd, Kondensationsprodukte des Phenols mit Formaldehyd und Natriumsulfit, Polyoxyethylenoctylphenolether, ethoxyliertes Isooctyl-, Octyl- oder Nonylphenol, Tributylphenylpolyglykolether, Alkylarylpolyetheralkohole, Isotridecylalkohol, Fettalkohol/Ethylenoxid-Kondensate, ethoxyliertes Rizinusöl, Polyoxyethylenalkylether, ethoxylierte Triarylphenole, Salze phosphatierter Triarylphenolethoxylate Polyoxypropylenalkylether, Laurylalkoholpolyglykoletheracetat, Sorbitester, Ligninsulfit-Ablaugen oder Methylcellulose oder deren Mischungen in Betracht.

Bei Mitverwendung oberflächenaktiver Stoffe liegt deren Anteil im allgemeinen im Bereich von 0,5 bis 25 Gew.%, bezogen auf das Gesamtgewicht der festen Mischung.

Die erfindungsgemäßen festen Mischungen können auch zusammen mit Trägermaterialien verwendet werden. Beispielhaft seien als Trägerstoffe erwähnt:
Mineralerden wie Kieselsäuren, Kieselgele, Silikate, Talkum, Kaolin, Attaclay, Kalkstein, Kreide, Löß, Ton, Dolomit, Diatomeenerde, Calciumsulfat, Magnesiumsulfat, Magnesiumoxid, gemahlene Kunststoffe, Düngemittel wie Ammoniumsulfat, Ammoniumphosphat, Ammoniumnitrat, Thioharnstoff und Harnstoff, pflanzliche Produkte wie Getreidemehle, Baumrinden-, Holz- und Nußschalenmehl, Cellulosepulver, Attapulgite, Montmorillonite, Glimmer, Vermiculite, synthetische Kieselsäuren und synthetische Calciumsilicate oder deren Mischungen.

Als weitere Zusatzstoffe in an sich üblichen Mengen können ferner eingesetzt werden :
Wasserlösliche Verbindungen oder Salze wie :
   Natriumsulfat, Kaliumsulfat, Natriumchlorid, Kaliumchlorid, Natriumacetat, Ammoniumhydrogensulfat, Ammoniumchlorid, Ammoniumacetat, Ammoniumformiat, Ammoniumoxalat, Ammoniumcarbonat, Ammoniumhydrogencarbonat, Ammoniumthiosulfat, Ammoniumhydrogendiphosphat, Ammoniumdihydrogenmonophosphat, Ammoniumnatriumhydrogenphosphat, Ammoniumthiocyanat, Ammoniumsulfamat oder Ammoniumcarbamat;
Bindemittel, wie :
   Polyvinylpyrrolidon, Polyvinylalkohol, partiell hydrolysiertes PolyvinylacetatCarboxymethylcellulose, Stärke, Vinylpyrrolidon/Vinylacetat-Copolymere und Polyvinylacetat oder deren Mischungen;
Schmiermittel, wie :
   Mg-Stearat, Na-Stearat, Talkum oder Polyethylenglykol oder deren Mischungen;
Entschäumer, wie :
   Silikonemulsionen, langkettige Alkohole, Phosphorsäureester, Acetylendiole, Fettsäuren oder fluororganische Verbindungen,
   und
Komplexbildner, wie :
   Salze der Ethylendiamintetraessigsäure (EDTA), Salze der Trinitrilotriessigsäure oder Salze von Polyphosphorsäuren oder deren Mischungen.

Die erfindungsgemäßen festen Mischungen können in Form von Pulver, Granulat, Briketts, Tabletten und ähnliche Formulierungsvarianten hergestellt werden. Neben Pulvern sind dabei Granulate besonders bevorzugt. Bei den Pulvern kann es sich um wasserlösliche oder wasserdispergierbare Pulver handeln. Bei den Granulaten kann es sich um wasserlösliche oder wasserdispergierbare Granulate zum Einsatz in der Spritzapplikation oder um sog. Streugranulate zur Direktapplikation handeln. Die mittlere Teilchengröße der Granulate liegt im allgemeinen zwischen 200 µm und 2 mm.

Die erhaltenen Granulatformulierungen sind staubfreie, freifließende, nicht verbackende Produkte, die in kaltem Wasser gut löslich bzw. dispergierbar sind.

Aufgrund ihrer Eigenschaften können die Produkte leicht in größeren Mengen abgefüllt werden. Neben Gebinden wie Kunststoff-, Papier-, Laminatsäcken oder Beuteln können sie in Kartons oder anderen Bulk-Containern gehandhabt werden. Um eine Exposition des Anwenders weiter zu vermeiden, ist es möglich, die Produkte in wasserlöslichen Folienbeuteln, wie z.B. Polyvinylalkohol-Folienbeuteln, zu verpacken, die direkt in den Spritztank gegeben werden und sich dort auflösen. Für solche wasserlöslichen Folien können eingesetzt werden u.a. Polyvinylalkohol oder Cellulose-Derivaten wie Methylcellulose, Methyl-hydroxypropyl-cellulose oder Carboxymethylcellulose. Durch Portionierung in anwendungsgerechter Größe kommt der Anwender nicht mehr mit dem Produkt in Berührung. Vorzugsweise werden die wasserlöslichen Beutel in einer wasserdampfundurchlässigen äußeren Hülle wie Polyethylen-Folie, polyethylen-laminiertes Papier oder Alufolie verpackt.

Die erfindungsgemäßen Festformulierungen lassen sich nach verschiedenen. dem Fachmann bekannten Verfahren herstellen.

Als bevorzugte Herstellverfahren für die genannten Formulierungen sind die Extrudergranulation, Sprühtrocknung, Wirbelschichtagglomeration, Mischergranulation und die Tellergranulation zu nennen.

Besonders geeignet ist die Wirbelschichtgranulation (WSG). Je nach gewünschter Zusammensetzung der Formulierung wird eine wässrige Lösung, Emulsion oder Suspension, die alle Rezepturbestandteile enthält, in einer WSG-Apparatur versprüht und agglomeriert.

Wahlweise können aber auch Wirkstoffsalze und/oder anorganische Ammoniumsalze in der Apparatur vorgelegt werden und mit einer Lösung oder Emulsion/Suspension der restlichen Rezepturbestandteile besprüht und dabei agglomeriert werden. Ferner ist es möglich, wässrige Lösungen, Emulsionen oder Suspensionen, die bestimmte Rezepturbestandteile enthalten, nacheinander auf ein Wirkstoffgranulat, ein Wirkstoffsalz und/oder ein anorganisches Ammoniumsalz aufzutragen und so verschiedene umhüllende Schichten zu erhalten.

Im allgemeinen erfolgt im Zuge der Wirbelschichtgranulierung eine ausreichende Trocknung des Granulats. Es kann jedoch vorteilhaft sein, der Granulation einen separaten Trocknungsschritt im gleichen oder in einem separaten Trockner nachzuschalten. Im Anschluß an die Granulation/Trocknung wird das Produkt abgekühlt und gesiebt.

Ein weiteres besonders geeignetes Verfahren ist die Extrudergranulation. Zur Extrudergranulierung eignen sich vorzugsweise Korb-, Radial- oder Dome-Extruder mit geringer Verdichtung des Granulatkorns.

Zur Granulation wird eine Feststoffmischung in einem geeigneten Mischer mit einer Granulierflüssigkeit angeteigt, bis eine extrudierbare Masse entsteht. Diese wird in einem der genannten Extruder extrudiert. Zur Extrusion werden Lochgrößen zwischen 0,3 und 3 mm verwendet (vorzugsweise 0,5-1,5 mm) . Als Feststoffmischungen dienen Gemische aus Wirkstoffen, Formulierungshilfsmitteln und ggf. wasserlöslichen Salzen. Diese werden im allgemeinen vorgemahlen. Teilweise ist es ausreichend, wenn nur die wasserunlöslichen Stoffe in geeigneten Mühlen vorgemahlen werden.

Als Granulierflüssigkeit eignet sich Wasser, die erfindungsgemäßen APG oder wässrige Lösungen davon. Weiterhin geeignet sind, wässrige Lösungen von anorg. Salzen, nichtionischen Tensiden, anionischen Tensiden, Lösungen von Bindemitteln wie Polyvinylpyrrolidon, Polyvinylalkohol, Carboxymethylcellulose, Stärke, Vinylpyrrolidin/Vinylacetat-Copolymere, Zucker, Dextrin oder Polyethylenglykol. Nach Extrudergranulation wird das erhaltene Granulat getrocknet und ggf. gesiebt um von Grob- und Feinanteil abzutrennen.

### Vergleichsbeispiel 1

Eine Vormischung bestehend aus:

| | |
|---|---|
| 73,1 g | SU 1 (Verbindung Nr. 47 aus Tabelle 1) (techn. 95,7%) |
| 8 g | Tamol^{R} NH |
| 17,9 g | Ufoxane^{R} 3A |

wurde gemischt und in einer Rotorschnellmühle vermahlen.

Im weiteren wurden:

| | |
|---|---|
| 7,1 g | Vormischungl |
| 5 g | Extrusil^{R} (Degussa) |
| 77,9 g | Ammoniumsulfat |

in einem Moulinette Haushaltsmischer mit 29g Lutensol^{R} ON 80 als 50%ige wss. Lösung vermischt. Die erhaltene Masse wurde mittels eines Extruders (KAR-75, Fitzpatrick Europe) extrudiert. Die erhaltenen feuchten Granulate wurden Trockenschrank getrocknet.

### Vergleichsbeispiel 2

Eine Vormischung bestehend aus:

| | |
|---|---|
| 73,1 g | SU 1 (techn. 95,7%) |
| 8 g | Tamol^{R} NH |
| 17,9 g | Ufoxane^{R} 3A |

wurde gemischt, und in einer Rotorschnellmühle vermahlen.

Im weiteren wurden:

| | |
|---|---|
| 7,1 g | Vormischung |
| 15 g | Extrusil^{R} (Degussa) |
| 77,9 g | Ammoniumsulfat |

in einem Moulinette Haushaltsmischer mit 23g Armoblem^{R} 557 als 50%ige wss. Lösung vermischt. Die erhaltene Masse wurde mittels eines Extruders (KAR-75, Fitzpatrick Europe) extrudiert. Die erhaltenen feuchten Granulate wurden Trockenschrank getrocknet.

### Vergleichsbeispiel 3

Eine Vormischung bestehend aus:

| | |
|---|---|
| 285 g | destilliertem Wasser |
| 30,3 g | SU 1 technisch |
| 20 g | Ufoxane^{R} 3A |
| 10 g | Tamol^{R} NH |
| 2,5 g | Antischaumemulsion SRE |
| 30 g | Sipernat^{R} 50 |
| 560 g | Pluronic^{R} PE 6400 |

wurde gemischt und in einer Perlmühle vermahlen. Die entstandene Suspension wurde später als Sprühmischung verwendet.

In einem Laborwirbelschichtgranulator (Combi Coata^{R},Fa. Niro Aeromatic) wurden 137 g pulverförmiges Ammoniumsulfat vorgelegt. Über dem Wirbelboden befand sich eine Zweistoffdüse. Die Vorlage wurde mit Luft von 120 °C Eingangstemperatur gewirbelt . Der Spühdruck der Zweistoffdüse wurde auf 2 bar eingestellt. Die Sprühmischung wurde in die Wirbelschicht eingesprüht und das Wasser verdampft. Das erhaltene Granulat wurde zur Abtrennung des Feinanteils über ein Sieb mit 0,2 mm Maschenweite abgesiebt.

### Vergleichsbeispiel 4

Eine Mischung bestehend aus:

| | |
|---|---|
| 6,9 g | Metsulfuron-Methyl (techn. 99%) |
| 3 g | Tamol^{R} NH |
| 6 g | Ufoxane^{R} 3A |
| 15 g | Extrusil^{R} |
| 43,1 g | Ammonsulfat |

wurde intensiv vermischt und mittels einer Laborrotorschnellmühle vermahlen. Die erhaltene Pulvermischung wurde in einem Planetenmischer (Kenwood Chef) mit 25 Teilen Lutensol^{R} ON 30 vermischt. Die erhaltene Masse wurde mittels eines Extruders (DGL-1, Fitzpatrick Europe) extrudiert. Die erhaltenen feuchten Granulate wurden in einem Wirbelbetttrockner getrocknet.

### Beispiel 1

Eine Vormischung bestehend aus:

| | |
|---|---|
| 73,1 g | SU 1 (techn. 95,7%) |
| 8 g | Tamol^{R} NH |
| 17,9 g | Ufoxane^{R} 3A |

wurde gemischt, und in einer Rotorschnellmühle vermahlen.

Im weiteren wurden:

| | |
|---|---|
| 7,1 g | Vormischung |
| 15 g | Extrusil^{R} (Degussa) |
| 52,9 g | Ammoniumsulfat |
| 18,5 g | Lutensol^{R} GD 70 |

in einem Moulinette Haushaltsmischer vermischt. Die erhaltene Masse wurde mittels eines Extruders (KAR-75, Fitzpatrick Europe) extrudiert. Die erhaltenen feuchten Granulate wurden im Trockenschrank getrocknet.

### Beispiel 2

Eine Vormischung bestehend aus:

| | |
|---|---|
| 285 g | destilliertem Wasser |
| 15,8 g | SU 1 technisch |
| 31g | Ufoxane^{R} 3A |
| 15,3 g | Tamol^{R} NH |
| 2,5 g | Antischaumemulsion SRE |
| 7,5 g | Sipernat^{R} 22 |
| 75g | AG^{R} 6202 |

wurde gemischt und in einer Perlmühle vermahlen. Die entstandene Suspension wurde später als Sprühmischung verwendet.

In einem Laborwirbelschichtgranulator (Combi Coata^{R},Fa. Niro Aeromatic) wurden 120 g pulverförmiges Ammoniumsulfat vorgelegt. Über dem Wirbelboden befand sich eine Zweistoffdüse. Die Vorlage wurde mit Luft von 120 °C Eingangstemperatur gewirbelt. Der Spühdruck der Zweistoffdüse wurde auf 2 bar eingestellt. Die Sprühmischung wurde in die Wirbelschicht eingesprüht und das Wasser verdampft. Das erhaltene Granulat wurde zur Abtrennung des Feinanteils über ein Sieb mit 0,2 mm Maschenweite abgesiebt.

### Beispiel 3

Eine Vormischung bestehend aus:

| | |
|---|---|
| 73,1 g | SU 1 (techn. 95,7%) |
| 8 g | Tamol^{R} NH |
| 17,9 g | Ufoxane^{R} 3A |

wurde gemischt und in einer Rotorschnellmühle vermahlen.

Im weiteren wurden:

| | |
|---|---|
| 7,1 g | Vormischung |
| 15 g | Extrusil^{R} (Degussa) |
| 52,9 g | Ammoniumsulfat |
| 16 g | AG^{R} 6202 |

in einem Moulinette Haushaltsmischer vermischt. Die erhaltene Masse wurde mittels eines Extruders (KAR-75, Fitzpatrick Europe) extrudiert. Die erhaltenen feuchten Granulate wurden im Trockenschrank getrocknet.

### Beispiel 4

Eine Mischung bestehend aus:

| | |
|---|---|
| 5,1 g | SU 1 (techn. 98,54%) |
| 3 g | Tamol^{R} NH |
| 6 g | Ufoxane^{R} 3A |
| 15 g | Extrusil^{R} (Degussa) |
| 44,9 g | Ammoniumsulfat |

wurde gemischt und in einer Rotorschnellmühle vermahlen. Das erhaltene Pulver wurde in einem Moulinette Haushaltsmischer mit 21 g Atplus^{R} 450 und 1 g Antischaummittel SRE vermischt. Die erhaltene Masse wurde mittels eines Extruders (KAR-75, Fitzpatrick Europe) extrudiert. Die erhaltenen feuchten Granulate wurden im Trockenschrank getrocknet.

### Beispiel 5

Eine Mischung bestehend aus:

| | |
|---|---|
| 5,1 g | SU 1 (techn. 98,54%) |
| 3 g | Tamol^{R} NH |
| 6 g | Ufoxane^{R} 3A |
| 15 g | Extrusil^{R} (Degussa) |
| 44,9g | Ammoniumsulfat |

wurde gemischt und in einer Rotorschnellmühle vermahlen. Das erhaltene Pulver wurde in einem Moulinette Haushaltsmischer mit 25g Agrimul^{R} PG 2067 und 1 g Antischaummittel SRE vermischt. Die erhaltene Masse wurde mittels eines Extruders (KAR-75,Fitzpatrick Europe) extrudiert. Die erhaltenen feuchten Granulate wurden im Trockenschrank getrocknet.

### Beispiel 6

Eine Vormischung bestehend aus:

| | |
|---|---|
| 5,1 g | SU 1 (techn. 98,5%) |
| 3,1 g | Cinidon-Ethyl (techn. 98%) |
| 1 g | Tamol^{R} NH |
| 2 g | Ufoxane^{R} 3A |
| 15 g | Extrusil^{R} (Degussa) |
| 47,8 g | Ammoniumsulfat |

wurde gemischt und in einer Strahlmühle vermahlen.

Im weiteren wurden:

| | |
|---|---|
| 74 g | Vormischung |
| 25 g | Lutensol^{R} GD 70 (Alkylpolyglucosid, BASF AG, techn. 70%) |
| 1 g | Antischaummittel SRE |

in einem Planetenmischer (Kenwood-Chef) vermischt und mit insgesamt 4g Wasser (bezogen auf 100g Produkt) versetzt. Die erhaltene Masse wurde mittels eines Extruders (DGL-1, Fitzpatrick Europe) extrudiert. Die erhaltenen feuchten Granulate wurden in einem Wirbelbetttrockner getrocknet. Man erhielt ein gut dispergierendes Granulat.

### Beispiel 7

Eine Vormischung bestehend aus:

| | |
|---|---|
| 5,1 g | SU 1 (techn. 98,5%) |
| 3,1 g | Cinidon-Ethyl (techn. 98%) |
| 1 g | Tamol^{R} NH |
| 2 g | Ufoxane^{R} 3A |
| 15 g | Extrusil^{R} (Degussa) |
| 47,8 g | Ammoniumsulfat |

wurde gemischt und in einer Strahlmühle vermahlen.

Im weiteren wurden:

| | |
|---|---|
| 74 g | Vormischung |
| 22,5 g | AG^{R} 6202 (Alkylpolyglucosid, Akzo, techn. 65%) |
| 1 g | Antischaummittel SRE |

in einem Planetenmischer (Kenwood-Chef) vermischt. Die erhaltene Masse wurde mittels eines Extruders (DGL-1, Fitzpatrick Europe) extrudiert. Die erhaltenen feuchten Granulate wurden in einem Wirbelbetttrockner getrocknet. Man erhielt ein gut dispergierendes Granulat.

### Beispiel 8

Eine Mischung bestehend aus:

| | |
|---|---|
| 126 g | Cinidon-ethyl |
| 209 g | SU 1 |
| 4361 g | Destilliertem Wasser |
| 359 g | Ufoxane^{R} 3A |
| 2153 g | Tamol^{R} NH |
| 34 g | Antischaumemulsion SRE |
| 1538 g | AG^{R} 6202 |

wurde gemischt und mit einer Perlmühle vermahlen. Die entstandene Suspension wurde als Sprühmischung verwendet. Die Sprühmischung wurde in einen Laborwirbelschichtgranulator (MP1^{R}, Fa. Niro Aeromatic) eingedüst und zu einem wasserdispergierbaren Granulat getrocknet. Dabei betrug die Temperatur der Trocknungsluft 120°C und die Zweistoffdüse, die über der Wirbelschicht angebracht war, wurde mit 2 bar Sprühdruck betrieben. Das erhaltene Granulat wurde zur Abtrennung des Feinanteils über ein Sieb mit 0,2 mm Maschenweite abgesiebt.

### Beispiel 9

Eine Vormischung bestehend aus:

| | |
|---|---|
| 73,1 g | SU 1 (techn. 95,7%) |
| 8 g | Tamol^{R} NH |
| 17,9 g | Ufoxane^{R} 3A |

wurde gemischt und in einer Rotorschnellmühle vermahlen.

Im weiteren wurden:

| | |
|---|---|
| 3,8 g | Vormischung |
| 60,6 g | Bentazon-Na (techn. 87,5%) |
| 22,6 g | Ammoniumsulfat |
| 2 g | Lutensol^{R} GD 70 (Alkylpolyglucosid, BASF AG, techn. 70 %) |
| 1 % | Antischaummittel SRE |

in einem Planetenmischer (Kenwood-Chef) vermischt und mit insgesamt 9g Wasser (bezogen auf 100g Produkt) versetzt. Die erhaltene Masse wurde mittels eines Extruders (DGL-1, Fitzpatrick Europe) extrudiert. Die erhaltenen feuchten Granulate wurden in einem Wirbelbetttrockner getrocknet.

### Beispiel 10

Eine Vormischung bestehend aus:

| | |
|---|---|
| 71 g | SU 1 (techn. 98,5%) |
| 8 g | Tamol^{R} NH |
| 21 g | Ufoxane^{R} 3A |

wurde gemischt und in einer Rotorschnellmühle vermahlen.

Im weiteren wurden:

| | |
|---|---|
| 3,8 g | Vormischung |
| 55,7 g | Ammonium-Bentazon (techn. 95,2 %) |
| 26,5 g | Ammoniumsulfat |
| 12 g | Lutensol^{R} GD 70 (Alkylpolyglucosid, BASF AG, techn. 70 %) |
| 1 g | Antischaummittel SRE |

in einem Planetenmischer (Kenwood-Chef) vermischt und mit insgesamt 9g Wasser (bezogen auf 100g Produkt) versetzt. Die erhaltene Masse wurde mittels eines Extruders (DGL-1, Fitzpatrick Europe). extrudiert. Die erhaltenen feuchten Granulate wurden in einem Wirbelbetttrockner getrocknet.

### Beispiel 11

Eine Vormischung bestehend aus:

| | |
|---|---|
| 1173 g | destilliertem Wasser |
| 92 g | SU 1 technisch |
| 125 g | Ufoxane^{R} 3A |
| 110 g | Ammoniumsulfat |
| 375 g | AG^{R} 6202 |
| 250 g | Extrusil^{R} |

wurde gemischt und in einer Perlmühle vermahlen. Die entstandene Suspension wurde dann als Sprühmischung verwendet.In einem Laborwirbelschichtgranulator (MP1 (RTM), Fa. Niro Aeromatic) 1523 g Natriumbentazon mit einer Korngröße kleiner als 1,0 mm vorgelegt. Über dem Wirbelboden befand sich eine Zweistoffdüse. Die Vorlage wurde mit Luft von 120 °C Eingangstemperatur gewirbelt . Der Sprühdruck der Zweistoffdüse wurde auf 2 bar eingestellt. Die Sprühmischung wurde in die Wirbelschicht eingesprüht und das Wasser verdampft. Das erhaltene Granulat wurde zur Abtrennung des Feinanteils über ein Sieb mit 0,2 mm Maschenweite abgesiebt.

### Beispiel 12

Eine Vormischung bestehend aus:

| | |
|---|---|
| 2548 g | destilliertem wasser |
| 75 g | SU 1 |
| 228 g | Ufoxane^{R} 3A |
| 730 g | Tamol^{R} NH |
| 451 g | AG^{R} 6202 |
| 301 g | Extrusil^{R} |

wurde gemischt und in einer Perlmühle vermahlen. Die entstandene Suspension wurde später als Sprühmischung verwendet.

In einem Laborwirbelschichtgranulator (MP1^{R},Fa. Niro Aeromatic) wurden 1065 g feinpulveriges Magnesium - Mecoprop-P vorgelegt. Über dem Wirbelboden befand sich eine Zweistoffdüse. Die Vorlage wurde mit Luft von 120 °C Eingangstemperatur gewirbelt. Der Sprühdruck der Zweistoffdüse wurde auf 2,5 bar eingestellt. Die Sprühmischung wurde in die Wirbelschicht eingesprüht und das Wasser verdampft. Das erhaltene Granulat wurde zur Abtrennung des Feinanteils über ein Sieb mit 0,2 mm Maschenweite abgesiebt.

### Beispiel 13

Eine Vormischung bestehend aus:

| | |
|---|---|
| 2655 g | destilliertem Wasser |
| 800 g | AG^{R} 6202 |
| 420 g | Ufoxane^{R} 3A |
| 210 g | Tamol^{R} NH |
| 340 g | Sipernat^{R} 50 S |

wurde gemischt und in einer Perlmühle vermahlen. Die entstandene Suspension wurde als Sprühflüssigkeit A verwendet.

In einem Laborwirbelschichtgranulator (MP1^{R},Fa. Niro Aeromatic) wurden 1020 g pulverförmiges Ammoniumsulfat vorgelegt. Über dem Wirbelboden befand sich eine Zweistoffdüse. Die Vorlage wurde mit Luft von 120°C Eingangstemperatur gewirbelt. Der Sprühdruck der . Zweistoffdüse wurde auf 2 bar eingestellt. Die Sprühmischung wurde in die Wirbelschicht eingesprüht und das Wasser verdampft. Es enstand das Vorgranulat A.

Eine weitere Vormischung B bestehend aus:

| | |
|---|---|
| 1725 g | Destilliertem Wasser |
| 103 g | SU 1 technisch |
| 618 g | MCPA |
| 127 g | Natronlauge |
| 192 g | Ufoxane^{R} 3A |
| 96 g | Tamol^{R} NH |
| 12,6 g | Antischaumemulsion SRE |

wurde gemischt und als Sprühflüssigkeit B verwendet.

In einem Laborwirbelschichtgranulator (MP1^{R}, Fa. Niro Aeromatic) wurden 1875 g Vorgranulat A vorgelegt. Über dem Wirbelboden befand sich eine Zweistoffdüse. Die Vorlage wurde mit Luft von 120°C Eingangstemperatur gewirbelt. Der Sprühdruck der Zweistoffdüse wurde auf 2 bar eingestellt. Die Sprühmischung B wurde in die Wirbelschicht eingesprüht und das Wasser verdampft. Es enstand das fertige Granulat. Das Granulat wurde zur Abtrennung des Feinanteils über ein Sieb mit 0,2 mm Maschenweite abgesiebt.

### Beispiel 14

Eine Vormischung bestehend aus:

| | |
|---|---|
| 6 g | SUl |
| 10 g | Clefoxydim-Lithium |
| 10 g | Extrusil^{R} |
| 10 g | Harnstoff |
| 3 g | Morwet^{R} EFW |
| 1 g | Aerosol^{R} OT B |
| 40 g | Tamol^{R} NH |

wurde intensiv vermischt und mittels einer Luftstrahlmühle vermählen. Die so erhaltene Pulvermischung wurde in einem Planetenmischer (Kenwood Chef) mit 20 Teilen AG^{R} 6202 vermischt. Zur Erzeugung einer extrudierfähigen Masse wurden weiterhin 1,8 % Wasser zugegeben. Die erhaltene Masse wurde mittels eines Extruders (DGL-1, Fitzpatrick Europe) extrudiert. Die erhaltenen feuchten Granulate wurden in einem Wirbelbetttrockner getrocknet.

### Beispiel 15

Eine Mischung bestehend aus :

| | |
|---|---|
| 6,9 g | Metsulfuron-Methyl (techn. 99%) |
| 3 g | Tamol NH |
| 6 g | Ufoxane 3A |
| 15 g | Extrusil |
| 43,1 g | Ammonsulfat |

wurde intensiv vermischt und mittels einer Laborrotorschnellmühle vermahlen. Die erhaltene Pulvermischung wurde in einem Planetenmischer (Kenwood Chef) mit 25 Teilen AG^{R} 6202 vermischt. Die erhaltene Masse wurde mittels eines Extruders (DGL-1, Fitzpatrick Europe) extrudiert. Die erhaltenen feuchten Granulate wurden in einem Wirbelbetttrockner getrocknet.

### Beispiel 16

Eine Mischung bestehend aus :

| | |
|---|---|
| 6,9 g | Metsulfuron-Methyl (techn. 99%) |
| 3 g | Tamol^{R} NH |
| 6 g | Ufoxane^{R} 3A |
| 15 g | Extrusil^{R} |
| 43,1 g | Ammonsulfat |

wurde intensiv vermischt und mittels einer Laborrotorschnellmühle vermahlen. Die erhaltene Pulvermischung wurde in einem Planetenmischer (Kenwood Chef) mit 25 Teilen Lutensol^{R} GD 70 vermischt. Die erhaltene Masse wurde mittels eines Extruders (DGL-1, Fitzpatrick Europe) extrudiert. Die erhaltenen feuchten Granulate wurden in einem Wirbelbetttrockner getrocknet.

### Beispiel 17

Eine Vormischung bestehend aus:

| | |
|---|---|
| 423 g | Destilliertem Wasser |
| 17,7 g | Natronlauge |
| 93,2 g | Dicamba technisch |
| 15,2 g | SU 1 technisch |
| 39,8 g | Ufoxane^{R} 3A |
| 79,5 g | Tamol^{R} NH |
| 92,3 g | AG^{R} 6202 (als 65%ige wäßrige Lösung) |

wurde in der angegebenen Reihenfolge gemischt und später als Sprühmischung verwendet.

In einem Laborwirbelschichtgranulator (Combi Coata^{R}, Fa. Niro Aeromatic) wurde die Granulation durchgeführt. Über dem Wirbelboden befand sich eine Zweistoffdüse. Mit Luft von 120°C Eingangstemperatur wurde gewirbelt. Der Spühdruck der Zweistoffdüse wurde auf 2 bar eingestellt. Die Sprühmischung wurde in die Wirbelschicht eingesprüht und das Wasser verdampft. Es entstand das fertige Granulat. Das Granulat wurde zur Abtrennung des Feinanteils über ein Sieb mit 0,2 mm Maschenweite abgesiebt.

### Beispiel 18

Eine Vormischung bestehend aus:

| | |
|---|---|
| 1350 g | destilliertem Wasser |
| 178 g | SU 1 technisch |
| 173 g | Ufoxane^{R} 3A |
| 346 g | Tamol^{R} NH |
| 1077 g | AG^{R} 6202 (als 65 %ige wässrige Lösung) |
| 15 g | Antischaumemulsion SRE |

wurde gemischt und in einer Perlmühle vermahlen. Die entstandene Suspension wurde als Sprühflüssigkeit A verwendet.

Eine weitere Vormischung bestehend aus:

| | |
|---|---|
| 1325 g | destilliertem Wasser |
| 145 g | Natronlauge |
| 781 g | Dicamba technisch |

wurde bis zum Auflösen bemischt und als Sprühflüssigkeit B verwendet.

In einem Laborwirbelschichtgranulator (MP1, Fa. Niro-Aeromatic) wurden 900 g pulverförmiges Ammoniumsulfat vorgelegt. Über dem Wirbelboden befand sich eine Zweistoffdüse. Die Vorlage wurde mit Luft von 120°C Eingangstemperatur gewirbelt. Der Sprühdruck war auf 2 bar eingestellt. Die Sprühflüssigkeit A wurde dann in die Wirbelschicht eingedüst und das Wasser verdampft. In einem weiteren Schritt wurde danach die Sprühflüssigkeit B in die Wirbelschicht eingedüst und das Wasser verdampft. Das entstandene Granulat wurde zur Abtrennung von Feinanteilen über ein Sieb mit 0,2 mm Maschenweite abgesiebt.

Die nachstehende Tabelle erläutert die in den Beispielen eingesetzten Komponenten :

**Tabelle 2 :**

| **Name** | **chem. Bezeichnung** | **Bezugsquelle** |
|---|---|---|
| Tamol^{R} NH | Naphthalinsulfonsäure-Formaldehyd-Kondensat | BASF AG |
| Ufoxane^{R} 3A | Na-Ligninsulfonat | Borregaard |
| Morwet^{R} D425 | Naphthalinsulfonsäure-Formaldehyd-Kondensat | BASF AG |
| Wettol^{R} NT 1 | Alkyl-Naphthalinsulfonat | BASF AG |
| Extrusil^{R} | hochdisperses Calciumsilicat | Degussa |
| Sipernat^{R} 22 | hochdisperse Kieselsäure | Degussa |
| Antischaummittel SRE | Silikonölemulsion | Wacker-Chemie |
| Lutensol^{R} ON 30 | Fettalkoholethoxylat (3EO) | BASF AG |
| Lutensol^{R} ON 80 | Fettalkoholethoxylat (8EO) | BASF AG |
| Lutensol^{R} GD 70 | Alkylpolyglycosid | BASF AG |
| AG^{R} 6202 | 2-Ethyl-hexyl-glucosid | Akzo |
| Atplus^{R} 450 | Alkylpolysaccharid/ Adjuvant-Blend | ICI |
| Agrimul^{R} PG 2067 | C₈-C₁₀-Alkylpolyglykosid | Henkel KGaA |
| Armoblem^{R} 557 | ethoxyliertes Fettamin | Akzo |
| Pluronic^{R} PE 6400 | EO/PO-Blockcopolymer | BASF AG |
| Morwet^{R} EFW | Anionischer Netzmittel-Blend | Witco |
| Sipernat^{R} 50 S | hochdisperse Kieselsäure | Degussa |
| SU-1 | Verb. 47 aus Tabelle 1 | |
| Clefoxydim | 2-{1- [2-(4-Chlorphenoxy)-propyloxyamino]-butyl}-5-tetrahydrothiopyran-3-yl-cyclohexan-1,3-dion | |
| Cinidon-ethyl | Ethyl-(Z)-2-chlor-3-[2-chlor-5-(4,5,6,7-tetrahydro-1,3-dioxoisoindoldion-2-yl-)-phenyl] acrylat | |
| Aerosol OT B | Natriumdioctylsulfosuccinat/Natriumbenzoat-Mischung | Cyanamid |

### Prüfmethoden

Der Wirkstoffgehalt an SU der Formulierungen gemäß den vorstehenden Beispielen wurde jeweils mittels quantitativer HPLC bestimmt, und wird in Tabelle 3 in Prozent angegeben.

### Versuche zur Lagerstabilität:

Zur Untersuchung der Lagerstabilität wurden Proben der jeweiligen Formulierung gemäß den Beispielen 1-18 und den Vergleichsbeispielen 1 bis 4 für eine bestimmte Zeit (14 d oder 30 d) in fest verschlossenem Glasgefäßen bei der jeweils angegebenen Temperatur (54°C bzw. 50°C) gelagert. Anschließend werden die Proben untersucht und mit dem Vergleichswert zu Beginn der Lagerung (Nullwert) verglichen. Der Wirkstoffgehalt wird als relativer Anteil des SU, bezogen auf den Nullwert (in Prozent) angegeben. Die Lagerversuche wurden in Anlehnung an die Methode CIPAC MT 46 durchgeführt. Dabei wird die Langzeitstabilität eines Produkts durch Kurzlagerung bei erhöhter Temperatur abgeschätzt.

Tabelle 3 gibt die Ergebnisse aus der Bestimmung der Lagerstabilität der hergestellten festen Mischungen aus den Beispielen 1-17 und den Vergleichsbeispielen 1-4 wieder.

**Tabelle 3 :**

| **Bsp.- Nr.** | **Adjuvans** | **Wirkstoffgehalt in Gew.%** | **rel. Wirkstoffgehalt SU nach 14 d, 54°C** | **rel. Wirkstoffgehalt SU nach 30 d, 50 °C** |
|---|---|---|---|---|
| V1 | Lutensol^{R}ON 80 | 3,2 | 16 | - |
| V2 | Armoblem^{R} 557 | 3,9 | 13 | - |
| V3 | Pluronic^{R}PE 6400 | 10,4 | 39 | - |
| V4 | Lutensol^{R}ON 30 | 7,3 | 48 | - |
| 1 | Lutensol^{R} GD 70 | 5,6 | 87 | - |
| 2 | AG^{R} 6202 | 6,3 | 86 | - |
| 3 | AG^{R} 6202 | 5,9 | 95 | - |
| 4 | Atplus^{R} 450 | 5,9 | 87 | - |
| 5 | Agrimul^{R} PG 2067 | 5 | 78 | - |
| 6 | Lutensol^{R}GD 70 | 5,15 | 92,2 | - |
| 7 | AG^{R} 6202 | 5,49 | | 90 |
| 8 | AG^{R} 6202 | 5,1 | 99 | - |
| 9 | Lutensol^{R}GD 70 | 2,77 | | 98 |
| 10 | Lutensol^{R}GD 70 | 2,77 | | 100 |
| 11 | AG^{R} 6202 | 2,9 | 62 | - |
| 12 | AG^{R} 6202 | 2,78 | 97,5 | - |
| 13 | AG^{R} 6202 | 2,36 | 70 | - |
| 14 | AG^{R} 6202 | | | - |
| 15 | AGR 6202 | 7,3 | 62 | - |
| 16 | Lutensol^{R}GD 70 | 7,3 | 70 | - |
| 17 | AG^{R} 6202 | 5,1 | - | - |
| 18 | AG^{R} 6202 | 4,66 | 90 | - |

Die Ergebnisse zeigen die überlegenen Eigenschaften der erfindungsgemäßen festen Mischungen.

## Patentansprüche

1. Feste Mischungen, enthaltend
a) einen Wirkstoff aus der Gruppe der Sulfonylharnstoffe, und
b) ein Alkylpolyglycosid.

2. Feste Mischung nach Anspruch 1, enthaltend einen Sulfonylharnstoff der Formel III 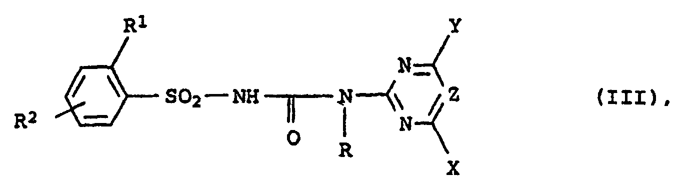 wobei die Substituenten folgende Bedeutung haben:
R¹ C₁-C₄-Alkyl, das eine bis fünf der folgenden Gruppen tragen kann: Methoxy, Ethoxy, SO₂CH₃, Cyano, Chlor, Fluor, SCH₃, S(O)CH₃;
Halogen;
eine Gruppe ER¹⁹, in der E O, S oder NR²⁰ bedeutet;
COOR¹²;
NO₂;
S(O)ₙR¹⁷, SO₂NR¹⁵R¹⁶, CONR¹³R¹⁴;
R² Wasserstoff, Methyl, Halogen, Methoxy, Nitro, Cyano, Trifluormethyl, Trifluormethoxy, Difluormethoxy oder Methylthio,
Y F, CF₃, CF₂Cl,CF₂H, OCF₃, OCF₂Cl, C₁-C₄-Alkyl oder C₁-C₄-Alkoxy;
X C₁-C₂-Alkoxy, C₁-C₂-Alkyl, C₁-C₂-Alkylthio, C₁-C₂-Alkylamino, Di-C₁-C₂-Alkylamino, Halogen, C₁-C₂-Halogenalkyl, C₁-C₂-Halogenalkoxy,
R Wasserstoff oder Methyl;
R¹⁹ C₁-C₄-Alkyl, C₂-C₄-Alkenyl, C₂-C₄-Alkinyl oder C₃-C₆-Cycloalkyl, welche 1 bis 5 Halogenatome tragen können. Ferner bedeutet R¹⁹ im Falle, daß E für O oder NR²⁰ steht, noch Methylsulfonyl, Ethylsulfonyl, Trifluormethylsulfonyl, Allylsulfonyl, Propargylsulfonyl oder Dimethylsulfamoyl;
R²⁰ Wasserstoff, Methyl oder Ethyl
R¹² eine C₁-C₄-Alkylgruppe, welche bis zu drei der folgenden Reste tragen kann: Halogen, C₁-C₄-Alkoxy, Allyl oder Propargyl;
R¹⁷ eine C₁-C₄-Alkylgruppe, welche einen bis drei der folgenden Reste tragen kann: Halogen, C₁-C₄-Alkoxy, Allyl oder Propargyl;
R¹⁵ Wasserstoff, eine C₁-C₂-Alkoxygruppe oder eine C₁-C₄-Alkylgruppe;
R¹⁶ Wasserstoff oder eine C₁-C₄-Alkylgruppe,
n 1 - 2
Z N, CH.

3. Feste Mischungen nach Anspruch 1, enthaltend einen weiteren herbiziden Wirkstoff c).

4. Feste Mischungen nach Anspruch 1, enthaltend 0,5 bis 75 Gew.% der Komponente a).

5. Feste Mischungen nach Anspruch 1, enthaltend 1 bis 50 Gew.% der Komponente b).

6. Feste Mischungen gemäß Anspruch 1, enthaltend ein Alkylpolyglycosid mit einem Polymerisationsgrad von 1-3.

7. Feste Mischungen gemäß Anspruch 6, enthaltend ein Alkylpolyglycosid mit einem Polymerisationsgrad von 1-2.

8. Verfahren zur Bekämpfung von unerwünschtem Pflanzenwuchs, **dadurch gekennzeichnet, daß** man die Pflanzen und/oder die von den Pflanzen freizuhaltende Fläche mit einer herbizid wirksamen Menge einer festen Mischung gemäß Anspruch 1 behandelt.

9. Verfahren zur Herstellung von Herbizidformulierungen, **dadurch gekennzeichnet, daß** man einen Sulfonylharnstoff mit einem Alkylpolyglykosid mischt.

## Claims

1. A solid mixture comprising
a) an active compound from the group of the sulfonylureas, and
b) an alkylpolyglycoside.

2. The solid mixture as claimed in claim 1, comprising a sulfonylurea of the formula III 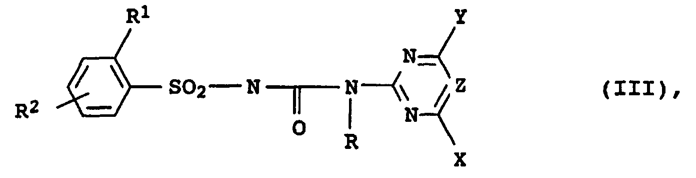 where:
R¹ is C₁-C₄-alkyl, which may carry from one to five of the following groups: methoxy, ethoxy, SO₂CH₃, cyano, chlorine, fluorine, SCH₃, S(O)CH₃;
halogen;
a group ER¹⁹, in which E is O, S or NR²⁰;
COOR¹²;
NO₂;
S(O)ₙR¹⁷, SO₂NR¹⁵R¹⁶, CONR¹³R¹⁴;
R² is hydrogen, methyl, halogen, methoxy, nitro, cyano, trifluoromethyl, trifluoromethoxy, difluoromethoxy or methylthio,
Y is F, CF₃, CF₂Cl, CF₂H, OCF₃, OCF_{z}Cl, C₁-C₄-alkyl or C₁-C₄-alkoxy;
X is C₁-C₂-alkoxy, C₁-C₂-alkyl, C₁-C₂-alkylthio, C₁-C₂-alkylamino, di-C₁-C₂-alkylamino, halogen, C₁-C₂-haloalkyl, C₁-C₂-haloalkoxy,
R is hydrogen or methyl;
R¹⁹ is C₁-C₄-alkyl, C₂-C₄-alkenyl, C₂-C₄-alkynyl or C₃-C₆-cycloalkyl, each of which may carry from 1 to 5 halogen atoms. Furthermore, in the case that E is O or NR²⁰, R¹⁹ is also methylsulfonyl, ethylsulfonyl, trifluoromethylsulfonyl, allylsulfonyl, propargylsulfonyl or dimethylsulfamoyl;
R²⁰ is hydrogen, methyl or ethyl
R¹² is a C₁-C₄-alkyl group which may carry up to three of the following radicals: halogen, C₁-C₄-alkoxy, allyl or propargyl;
R¹⁷ is a C₁-C₄-alkyl group which may carry from one to three of the following radicals: halogen, C₁-C₄-alkoxy, allyl or propargyl;
R¹⁵ is hydrogen, a C₁-C₂-alkoxy group or a C₁-C₄-alkyl group;
R¹⁶ is hydrogen or a C₁-C₄-alkyl group,
n is 1 - 2
Z is N, CH.

3. The solid mixture as claimed in claim 1, comprising a further herbicidally active compound c).

4. The solid mixture as claimed in claim 1, comprising from 0.5 to 75% by weight of the component a).

5. The solid mixture as claimed in claim 1, comprising from 1 to 50% by weight of the component b).

6. The solid mixture as claimed in claim 1, comprising an alkylpolyglycoside having a degree of polymerization of 1-3.

7. The solid mixture as claimed in claim 6, comprising an alkylpolyglycoside having a degree of polymerization of 1-2.

8. A method for controlling undesirable vegetation, which comprises treating the plants and/or the area to be kept free of the plants with a herbicidally effective amount of a solid mixture as claimed in claim 1.

9. A process for preparing herbicide formulations, which comprises mixing a sulfonylurea with an alkylpolyglycoside.

## Revendications

1. Mélanges solides contenant
a) une substance active du groupe des sulfonylurées, et
b) un alkylpolyglycoside.

2. Mélange solide selon la revendication 1, contenant une sulfonylurée de formule III 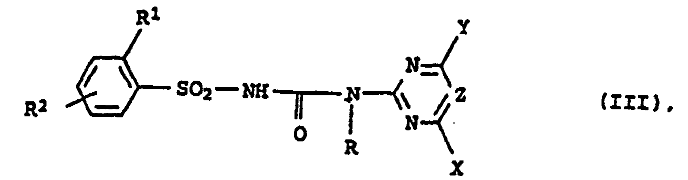 dans laquelle les symboles ont les significations suivantes
R¹, un groupe alkyle en C1-C4 qui peut porter un à cinq des substituants suivants méthoxy, éthoxy, SO₂CH₃, cyano, chloro, fluoro, SCH₃, S(O)CH₃;
un halogène ;
un groupe ER¹⁹ dans lequel E représente O, S ou NR20 ;
un groupe COOR¹² ;
un groupe NO₂ ;
un groupe S(O) R¹⁷, SO₂NR¹⁵R¹⁶, CONR¹³R¹⁴;
R² : l'hydrogène, un groupe méthyle, un halogène, un groupe méthoxy, nitro, cyano, trifluorométhyle, trifluorométhoxy, difluorométhoxy ou méthylthio ;
Y : F, CF₃, CF₂Cl, CF₂H, OCF₃, OCF₂Cl, un groupe alkyle en C1-C4 ou alcoxy en C1-C4 ;
X , un groupe alcoxy en C1-C2, alkyle en C1-C2, alkylthio en C1-C2, alkylamino en C1-C2, di-(alkyle en C1-C2)amino, un halogène, un groupe halogénoalkyle en C1-C2, halogénoalcoxy en C1-C2,
R : l'hydrogène ou un groupe méthyle ;
R¹⁹ : un groupe alkyle en C1-C4, alcényle en C2-C4, alcynyle en C2-C4 ou cycloalkyle en C3-C6 qui peuvent porter un à cinq atomes d'halogènes. En outre, dans le cas où E représente O ou NR²⁰, R¹⁹ peut encore représenter un groupe méthylsulfonyle, éthylsulfonyle, trifluorométhylsulfonyle, allylsulfonyle, propargylsulfonyle ou diméthylsulfamoyle ;
R²⁰ : l'hydrogène, un groupe méthyle ou éthyle
R¹² : un groupe allyle en C1-C4 qui peut porter un à trois des substituants suivants halogéno, alcoxy en C1-C4, allyle ou propargyle ;
R¹⁷ : un groupe alkyle en C1-C4 qui peut porter un à trois des substituants suivants halogéno, alcoxy en C2-C4, allyle ou propargyle ;
R¹⁵ : l'hydrogène, un groupe alcoxy en C1-C2 ou alkyle en C1-C4 ;
R¹⁶ : l'hydrogène ou un groupe alkyle en C1-C4,
n : 1 à 2
Z : N, CH.

3. Mélanges solides selon la revendication 1, contenant une autre substance active herbicide c).

4. Mélanges solides selon la revendication 1, contenant 0,5 à 75 % en poids du composant a).

5. Mélanges solides selon la revendication 1, contenant 1 à 50 % en poids du composant b).

6. Mélanges solides selon la revendication 1, contenant un alkylpolyglycoside au degré de polymérisation de 1 à 3.

7. Mélanges solides selon la revendication 6, contenant un alkylpolyglycoside au degré de polymérisation de 1 à 2.

8. Procédé pour combattre les croissances des végétaux indésirables, **caractérisé par le fait que** l'on traite les végétaux et/ou l'aire à maintenir libre de végétaux par une quantité herbicide efficace d'un mélange solide selon la revendication 1.

9. Procédé pour la préparation de produits herbicides, **caractérisé par le fait que** l'on mélange une sulfonylurée avec un alkylpolyglycoside.
